# EUROPÄISCHE PATENTSCHRIFT

(11) **EP 3 472 481 B1**
(45) Veröffentlichungstag und Bekanntmachung des Hinweises auf die Patenterteilung: **28.12.2022**
(21) Anmeldenummer: 17730780.8
(22) Anmeldetag: 16.06.2017
(51) Int. Cl.: F16D 1/10

(54) **ZAHNWELLE UND VERFAHREN ZU IHRER HERSTELLUNG, VERFAHREN ZUR HERSTELLUNG EINER FUNKTIONSWELLE**
TOOTHED SHAFT, METHOD FOR PRODUCING SAME, AND METHOD FOR PRODUCING A FUNCTIONAL SHAFT
ARBRE CANNELÉ ET PROCÉDÉ DE FABRICATION DUDIT ARBRE, PROCÉDÉ DE FABRICATION D'UN ARBRE FONCTIONNEL

(30) Priorität: 16.06.2016 DE 102016111029
(43) Veröffentlichungstag der Anmeldung: 24.04.2019
(73) Patentinhaber: thyssenkrupp Dynamic Components TecCenter AG, 9492 Eschen (LI); thyssenkrupp AG, 45143 Essen (DE)
(72) Erfinder: MUSTER, Manfred, 6713 Ludesch (AT); CURLIC, Marko, 9486 Schaanwald (LI); PFITSCHER, Aaron, 6713 Ludesch (AT)
(74) Vertreter: thyssenkrupp Intellectual Property GmbH
(86) Internationale Anmeldenummer: PCT/EP2017/064776
(87) Internationale Veröffentlichungsnummer: WO 2017/216345

(56) Entgegenhaltungen:
- EP-A1- 0 318 266
- EP-A1- 1 900 951
- WO-A1-2010/142408
- WO-A1-2011/160241
- DE-A1- 2 347 372
- DE-A1-102011 086 574
- US-A1- 2002 085 858

## Beschreibung

Die Erfindung betrifft eine Zahnwelle gemäß Patentanspruch 1, ein Verfahren zu ihrer Herstellung gemäß Patentanspruch 5, sowie ein Verfahren zur Herstellung einer Funktionswelle gemäß Patentanspruch 10.

Bei der Herstellung von Wellen für verschiedene Anwendungen ist es notwendig, Funktionselemente wie Nocken oder Sensorringe fest auf der Welle zu montieren. Insbesondere bei der Montage von Nocken auf der Welle muss deren axiale Position und relative Winkelausrichtung dabei präzise festgelegt werden können. Insbesondere bei Nocken muss außerdem sichergestellt werden, dass die Nocken sich nach der Montage nicht gegen die Welle verdrehen lassen.

Daher werden Nockenwellen häufig in einem Stück aus Gusseisen gegossen. Nachteilig ist hierbei allerdings, dass diese Wellen ein hohes Gewicht aufweisen und die Flexibilität bei der Wahl des Nockenmaterials und der Nockenposition und -geometrie sehr eingeschränkt ist.

Es werden daher gebaute Nockenwellen eingesetzt, bei denen die Nocken und andere Funktionselemente auf einer vorgefertigten Welle befestigt werden. Hierbei ergibt sich das eingangs genannte Problem, die Funktionselemente so an der Welle zu fixieren, dass diese ausreichend fest mit der Welle verbunden sind und sich nicht auf der Welle verschieben lassen oder gegen die Welle verdrehen lassen.

Es sind zur Lösung dieses Problems diverse Verfahren vorgeschlagen worden. Aus der WO 2012/031770 A1 ist beispielsweise ein Verfahren zum Zusammenbau einer Nockenwelle bekannt, bei dem Nockenelemente mit einer Bohrung auf eine Welle aufgeschoben werden. Hier wird vorgeschlagen, die Welle zu kühlen oder die aufzusetzenden Elemente zu erwärmen, um durch die temperaturebedingte Materialkontraktion bzw. -ausdehnung ein Aufschieben der Elemente auf die Welle zu erleichtern. Bei der anschließenden Erwärmung der Welle oder Abkühlung der aufgeschobenen Elemente wird dann eine Presspassung erreicht. Das bekannte Verfahren ist jedoch in mehrfacher Hinsicht nachteilig. Zum einen ist das Verfahren aufgrund der Erwärmungs- und Abkühlvorgänge zeitaufwändig. Zudem ist es schwierig, eine präzise Winkelausrichtung der aufgeschobenen Elemente sicherzustellen.

US 2002/085858 A1 zeigt eine Zahnwelle wobei wenigstens eine Zahndicke der Verzahnungen in dem Montageabschnitt größer ist als eine Zahndicke in dem verzahnten Abschnitt.

Der Erfindung liegt somit die Aufgabe zugrunde, eine Welle anzugeben, mit der das Montageverfahren von Funktionselementen auf der Welle vereinfacht wird und mit dem eine hohe Verdrehfestigkeit der Funktionselemente auf der Welle geschaffen wird.

Diese Aufgabe wird durch eine Zahnwelle gemäß Anspruch 1, ein Verfahren zu ihrer Herstellung gemäß Anspruch 5, sowie ein Verfahren zur Herstellung einer Funktionswelle gemäß Anspruch 10 gelöst.

Insbesondere wird die Aufgabe gelöst durch eine Zahnwelle mit einem verzahnten Abschnitt, in dem Verzahnungen auf dem Mantel der Zahnwelle ausgebildet sind, die sich parallel zu einer Rotationsachse der Zahnwelle erstrecken, wobei an den verzahnten Abschnitt ein Montageabschnitt mit Verzahnungen angrenzt, wobei die Anzahl und die radiale Position der Verzahnungen in dem Montageabschnitt der Anzahl und der radialen Position der Verzahnungen in dem verzahnten Abschnitt entsprechen, und wobei wenigstens eine Zahndicke der Verzahnungen in dem Montageabschnitt größer ist als eine Zahndicke in dem verzahnten Abschnitt, oder wenigstens ein Fußkreisdurchmesser der Verzahnungen in dem Montageabschnitt größer ist als der Fußkreisdurchmesser in dem verzahnten Abschnitt, oder wenigstens ein Kopfkreisdurchmesser der Verzahnungen in dem Montageabschnitt größer ist als der Kopfkreisdurchmesser in dem verzahnten Abschnitt.

Ein Vorteil der Erfindung liegt darin, dass die erfindungsgemäße Zahnwelle eine einfache Montage von Funktionselementen auf der Welle ermöglicht. Die Funktionselemente weisen dazu eine Bohrung mit einer Verzahnung auf, die komplementär zu der Verzahnung im verzahnten Abschnitt ist. Das Funktionselement ist damit auf den verzahnten Abschnitt der Zahnwelle aufschiebbar, durch die Formschlüssigkeit wird bereits ein Verdrehen des Funktionselements gegen die Welle unterbunden. Aufgrund der veränderten Geometrie der Verzahnung in dem Montageabschnitt kann das Funktionselement nun auf den Montageabschnitt aufgepresst werden. Dadurch wird eine belastbare, feste Verbindung zwischen dem Funktionselement und der Welle bei optimaler Verdrehfestigkeit erreicht. Es werden keine zusätzlichen Komponenten zur Fixierung des Funktionselements benötigt. Ebenso ist mit der vorgeschlagenen Zahnwelle keine aufwändige Vorbehandlung der Welle und des Funktionselements notwendig. Da Zahnwellen als Standardbauteil leicht verfügbar sind, kann mit der Erfindung eine Zahnwelle mit befestigten Komponenten geschaffen werden, die flexibel gestaltbar und kostengünstig ist. Es wird hier die Zahnwelle an sich beansprucht. In einer bevorzugten Ausgestaltung gemäß der Unteransprüche wird auch die Anordnung eines Funktionselements auf der Zahnwelle beansprucht.

Gemäß der Erfindung ist ein Flankenwinkel der Verzahnungen in dem Montageabschnitt größer als der Flankenwinkel in dem verzahnten Abschnitt. Dadurch kann ein Funktionselement in die Zahnflanken eingepresst werden. Damit ist die Festigkeit der Verbindung nochmals erhöht.

In einer weiteren Ausführungsform ist ein Funktionselement mit einer Bohrung, die komplementär zu den Verzahnungen des verzahnten Abschnitts der Zahnwelle verzahnt ist, auf den Montageabschnitt der Zahnwelle aufgepresst. Somit können mit der erfindungsgemäßen Zahnwelle beliebige Funktionswellen geschaffen werden. Vorzugsweise ist das Funktionselement durch eine Nocke oder einen Sensorring gebildet.

In einer weiteren bevorzugten Ausführungsform weist die Zahnwelle mehrere verzahnte Abschnitte mit angrenzenden Montageabschnitten zur Befestigung mehrerer Funktionselemente auf. Dadurch wird die Flexibilität bei der Positionierung der Funktionselemente nochmals erhöht.

Im Rahmen der Erfindung wird ferner ein Verfahren zur Herstellung einer Zahnwelle angegeben. Das erfindungsgemäße Verfahren umfasst die folgenden Schritte:
- Bereitstellen einer Zahnwelle mit mindestens einem verzahnten Abschnitt, in dem Verzahnungen auf dem Mantel der Zahnwelle ausgebildet sind, die sich parallel zu einer Rotationsachse der Zahnwelle erstrecken;
- Rollieren auf mindestens einem Teilabschnitt des mindestens einen verzahnten Abschnitts quer zur Achsrichtung der Zahnwelle zur Herstellung mindestens eines Montageabschnitts, wobei ein Flankenwinkel der Verzahnungen in dem Montageabschnitt größer ist als der Flankenwinkel in dem verzahnten Abschnitt ausgestaltet wird.

Mit dem erfindungsgemäßen Verfahren ist eine einfache Möglichkeit zur Herstellung einer Zahnwelle zur Verbindung mit Funktionselementen geschaffen. Es ist lediglich ein Arbeitsschritt notwendig, um die Montageabschnitte auf der Zahnwelle zu erzeugen. Das verwendete Bearbeitungsverfahren ist einfach durchzuführen und erfordert keinen hohen Zeit- oder Kostenaufwand. Die benötigte Rolliermaschine ist meist bereits verfügbar. Die Position des Montageabschnitts lässt sich zudem frei bestimmen, so dass keine Einschränkungen bei der Gestaltung der Welle gegeben sind.

Unter Rollieren wird ein spanloses Kaltumformungsverfahren verstanden, bei dem das vorhandene Oberflächenprofil der Zahnwelle plastisch verformt wird. Es wird ein Rollierwerkzeug mit mehreren Schneiden senkrecht zur Mantelfläche der Zahnwelle an die rotierende Zahnwelle angepresst. Die Kraft ist so gewählt, dass das Rollierwerkzeug nicht spanend arbeitet, sondern das Material lediglich verformt. Dabei findet ein Materialfluss von den Zähnen zwischen die Schneiden und zwischen die Zahnflanken statt.

Vorzugsweise wird durch das Rollieren eine Zahndicke der Verzahnungen in dem mindestens einen Montageabschnitt vergrößert. Dies ermöglicht ein Einpressen von Funktionselementen in die Zahnflanken des Montageabschnitts und verbessert die Verbindung zwischen Welle und Funktionselement.

Weiter vorzugsweise wird durch das Rollieren ein Fußkreisdurchmesser der Verzahnungen in dem mindestens einen Montageabschnitt vergrößert. So kann das Funktionselement auf den Montageabschnitt aufgepresst werden.

Es ist weiter bevorzugt, dass durch das Rollieren ein Kopfkreisdurchmesser der Verzahnungen in dem mindestens einen Montageabschnitt vergrößert wird. So kann das Funktionselement auf den Montageabschnitt aufgepresst werden.

Weiterhin ist bevorzugt, dass durch das Rollieren ein Materialfluss von Verzahnungen zwischen die Zahnflanken der Verzahnung in dem mindestens einen Montageabschnitt bewirkt wird.

Im Rahmen der Erfindung wird weiter ein Verfahren zur Herstellung einer Funktionswelle unter Verwendung einer erfindungsgemäßen Zahnwelle angegeben. Das erfindungsgemäße Verfahren umfasst die folgenden Schritte:
- Bereitstellen einer Zahnwelle;
- Aufschieben mindestens eines Funktionselements, insbesondere einer Nocke oder eines Sensorrings, mit einer Bohrung, die komplementär zu den Verzahnungen des verzahnten Abschnitts der Zahnwelle verzahnt ist, auf mindestens einen verzahnten Abschnitt der Zahnwelle;
- Aufpressen des mindestens einen Funktionselements auf den mindestens einen Montageabschnitt.

Die so gebildete Funktionswelle lässt sich einfach und kostengünstig in wenigen Arbeitsschritten herstellen, kann aufgrund der freien Platzierbarkeit der Montageabschnitte auf der Zahnwelle flexibel gestaltet werden und weist eine hohe Verdrehfestigkeit der aufgepressten Funktionselemente gegen die Zahnwelle auf.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1a: eine Zahnwelle gemäß einer Ausführungsform der vorliegenden Erfindung mit einem Montageabschnitt;
- Fig. 1b: einen Schnitt eines Funktionselements zur Anbringung an der Zahnwelle in Fig. 1a;
- Fig. 2a: die Zahnwelle aus Fig. 1a mit aufgeschobenem Funktionselement;
- Fig. 2b: einen Schnitt entlang der Linie I-I in Fig. 2a;
- Fig. 3a: einen Querschnitt eines verzahnten Abschnitts der Zahnwelle aus Fig. 1a zur Erläuterung relevanter geometrischen Größen der Verzahnung;
- Fig. 3b: eine Detailansicht des Querschnitts aus Fig. 3a;
- Fig. 4: eine Zahnwelle gemäß einer weiteren Ausführungsform der Erfindung mit mehreren verzahnten Abschnitten.

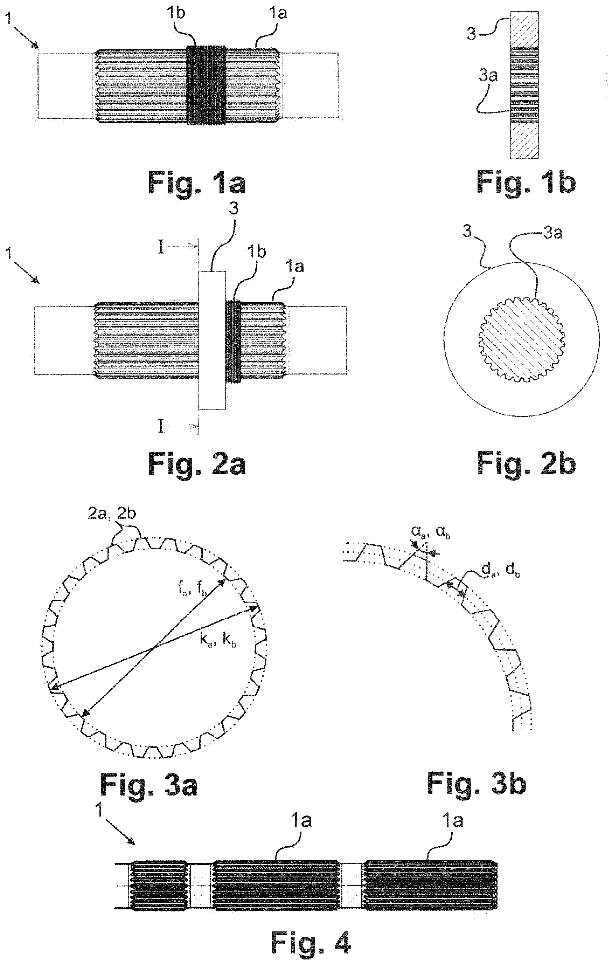

In Fig. 1a ist eine Zahnwelle 1 gemäß einer Ausführungsform der vorliegenden Erfindung gezeigt. Die Zahnwelle 1 hat einen verzahnten Abschnitt 1a, in dem Verzahnungen 2a auf dem Mantel der Zahnwelle 1 ausgebildet sind und sich parallel zur Rotationsachse der Zahnwelle 1 erstrecken. An den verzahnten Abschnitt 1a grenzt ein Montageabschnitt 1b an, der weiter unten beschrieben wird.

In Fig. 1b ist ein Funktionselement 3 im Schnitt gezeigt, das auf die Zahnwelle 1 aufschiebbar ist. Dazu weist das Funktionselement 3 eine Bohrung 3a auf, die komplementär zu der Verzahnung 1b des verzahnten Abschnitts 1a der Zahnwelle 1 ausgebildet ist. So kann das Funktionselement 3 verdrehfest auf die Zahnwelle 1 aufgeschoben werden. Das Funktionselement 3 ist in der vorliegenden Ausführungsform beispielsweise durch eine Nocke oder einen Sensorring gebildet.

In Fig. 2a ist das Funktionselement 3 auf die Zahnwelle 1 aufgeschoben. Hierbei ist das Funktionselement 3 bereits in den Montageabschnitt 1b eingeschoben. Wie in Fig. 1a zu erkennen ist, weist der Montageabschnitt 1b ebenfalls Verzahnungen 2b auf. Die Verzahnungen 2b entsprechen in Anzahl und radialer Position den Verzahnungen 2a im verzahnten Abschnitt 1a. Dies ist in Fig. 2b zu sehen, die einen Querschnitt entlang der Linie I-I in Fig. 2a zeigt. Somit ist es möglich, das Funktionselement 3 von dem verzahnten Abschnitt 1a in den Montageabschnitt 1b zu schieben. Die Form der Verzahnungen 2b weicht im Montageabschnitt 1b jedoch von der Form der Verzahnungen 2a im verzahnten Abschnitt 1a ab.

In Fig. 3a ist ein Querschnitt der Zahnwelle gezeigt, um die relevanten Geometrieparameter der Verzahnungen 2a, 2b zu definieren. Der Index "a" bezeichnet Geometrieparameter des verzahnten Abschnitts 1a, der Index "b" bezeichnet Geometrieparameter des Montageabschnitts 1b. Mit fₐ und f_{b} ist der Fußkreisdurchmesser der Verzahnungen 2a und 2b bezeichnet, kₐ und k_{b} bezeichnen den Kopfkreisdurchmesser der Verzahnungen 2a und 2b.

In Fig. 3b ist eine Detailansicht der Verzahnungen 2a und 2b gezeigt. Auf der halben Höhe der Verzahnungen 2a, 2b ist die Zahndicke dₐ, d_{b} definiert. Ferner ist der Flankenwinkel aₐ, a_{b} der Verzahnungen 2a, 2b eingezeichnet.

Zur Herstellung der gezeigten Zahnwelle 1 wird eine Zahnwelle 1 mit einem verzahnten Bereich 1a bereitgestellt und auf einem Teilbereich der Verzahnung 2a rolliert, um den Montageabschnitt 1b herzustellen. Durch das Rollieren wird eine Kaltumformung der Verzahnung 2b in dem Montageabschnitt 1b bewirkt. Wird ein Rollierwerkzeug mit mehreren Schneiden verwendet, wird lokal Material der Verzahnung zwischen die Schneiden gepresst. In diesen Bereichen wird also der Kopfkreisdurchmesser k_{b} in dem Montageabschnitt 1b gegenüber dem Kopfkreisdurchmesser kₐ des verzahnten Bereichs 1a vergrößert. Außerdem fließt durch das Rollieren Material zwischen die Zahnflanken der Verzahnung 1b. Dadurch wird lokal der Fußkreisdurchmesser f_{b} gegenüber dem Fußkreisdurchmesser fₐ des verzahnten Bereichs 1a vergrößert.

Die Anpresskraft des Rollierwerkzeugs an die Zahnwelle kann so gewählt werden, dass außerdem die Zahndicke d_{b} in dem Montageabschnitt gegenüber der Zahndicke dₐ in dem verzahnten Abschnitt vergrößert wird. Ebenso wird durch das Rollieren der Flankenwinkel a_{b} gegenüber dem Flankenwinkel aₐ vergrößert.

Durch die veränderte Geometrie der Verzahnung 2b in dem Montageabschnitt 1b kann das Funktionselement 3, dessen Bohrung 3a formschlüssig mit der Verzahnung 1a ist, auf den Montageabschnitt 1b aufgepresst werden. Ist in dem Montageabschnitt 1b die Zahndicke d_{b} und/oder der Flankenwinkel a_{b} vergrößert, wird das Funktionselement in die Flanken der Verzahnung 2b eingepresst. Die komplementär zur Verzahnung 1a ausgebildete Bohrung 3a stellt bereits sicher, dass das Funktionselement 3 nicht gegen die Zahnwelle 1 verdrehbar ist. Durch das Auf- und/oder Einpressen in den Montageabschnitt 1b wird das Funktionselement 3 schließlich auf der Zahnwelle 1 fixiert. Die so gebildete Verbindung ist äußerst stabil und kann ohne aufwändige Bearbeitungsverfahren oder zusätzliche Elemente gebildet werden.

In Fig. 4 ist eine alternative Ausführungsform der Zahnwelle 1 vor der Herstellung von Montageabschnitten 1b gezeigt. Die in Fig. 4 gezeigte Zahnwelle 1 weist mehrere verzahnte Abschnitte 1a auf. So können mehrere Montageabschnitte 1b durch Rollieren auf den jeweiligen verzahnten Abschnitten 1a hergestellt werden.

Mit dem beschriebenen Verfahren ist es natürlich möglich, mehrere Montageabschnitte 1b in einem verzahnten Bereich 1a herzustellen. So kann die Position der Funktionselemente 3 auf der Zahnwelle 1 frei bestimmt werden.

Mit den beschriebenen Zahnwellen 1 können durch Rollieren und anschließendes Aufpressen von Funktionselementen 3 verschiedene Funktionswellen hergestellt werden. Insbesondere können robuste Nockenwellen hergestellt werden, wenn als Funktionselemente 3 Nocken verwendet werden. Auf der Nockenwelle können weitere Funktionselemente 3 wie Sensorringe fixiert werden. Die genaue Anordnung der Funktionselemente 3 kann dabei unmittelbar vor der Montage festgelegt werden, indem gezielt an den entsprechenden Positionen auf der Zahnwelle 1 rolliert wird. Insgesamt wird so die Herstellung beliebiger Funktionswellen bei hoher Stabilität der fixierten Funktionselemente 3 kostengünstig bei geringem Aufwand ermöglicht.

Zur Herstellung des Montageabschnitts 1b kann überdies ein Rollierwerkzeug verwendet werden, das aus einer oder mehreren glatten Rollen besteht. Auch mit einem solchen Rollierwerkzeug lässt sich durch Kaltumformung ein Materialfluss zwischen die Zahnflanken im Montageabschnitt 1b erreichen, bei dem die Geometrie der Verzahnung 2b so verändert wird, dass ein Funktionselement 3 wie oben beschrieben in dem Montageabschnitt 1b fixiert werden kann.

## Patentansprüche

1. Zahnwelle (1) mit einem verzahnten Abschnitt (1a), in dem Verzahnungen (2a) auf dem Mantel der Zahnwelle (1) ausgebildet sind, die sich parallel zu einer Rotationsachse der Zahnwelle (1) erstrecken, und
an den verzahnten Abschnitt (1a) ein Montageabschnitt (1b) mit Verzahnungen (2b) angrenzt, wobei die Anzahl und die radiale Position der Verzahnungen (2b) in dem Montageabschnitt (1b) der Anzahl und der radialen Position der Verzahnungen (2a) in dem verzahnten Abschnitt (1a) entsprechen, und wobei wenigstens eine Zahndicke (d_{b}) der Verzahnungen (2b) in dem Montageabschnitt (2a) größer ist als eine Zahndicke (dₐ) in dem verzahnten Abschnitt (1a), oder wenigstens ein Fußkreisdurchmesser (f_{b}) der Verzahnungen (2b) in dem Montageabschnitt (1b) größer ist als der Fußkreisdurchmesser (fₐ) in dem verzahnten Abschnitt (1a), oder wenigstens ein Kopfkreisdurchmesser (k_{b}) der Verzahnungen (2b) in dem Montageabschnitt (1b) größer ist als der Kopfkreisdurchmesser (kₐ) in dem verzahnten Abschnitt (1a), **dadurch gekennzeichnet, dass**
ein Flankenwinkel (a_{b}) der Verzahnungen (2b) in dem Montageabschnitt (1b) größer ist als der Flankenwinkel (aₐ) in dem verzahnten Abschnitt (1a).

2. Zahnwelle (1) nach Anspruch 1,
**dadurch gekennzeichnet, dass**
ein Funktionselement (3) mit einer Bohrung (3a), die komplementär zu den Verzahnungen des verzahnten Abschnitts (1a) der Zahnwelle (1) verzahnt ist, auf den Montageabschnitt (1b) der Zahnwelle (1) aufgepresst ist.

3. Zahnwelle (1) nach Anspruch 2,
**dadurch gekennzeichnet, dass**
das Funktionselement (3) durch eine Nocke oder einen Sensorring gebildet ist.

4. Zahnwelle (1) nach einem der vorhergehenden Ansprüche,
**dadurch gekennzeichnet, dass**
die Zahnwelle mehrere verzahnte Abschnitte (1a) mit angrenzenden Montageabschnitten (1b) zur Befestigung mehrerer Funktionselemente (3) aufweist.

5. Verfahren zur Herstellung einer Zahnwelle (1) nach einem der vorhergehenden Ansprüche, umfassend die folgenden Schritte:
- Bereitstellen einer Zahnwelle (1) mit mindestens einem verzahnten Abschnitt (1a), in dem Verzahnungen (2a) auf dem Mantel der Zahnwelle (1) ausgebildet sind, die sich parallel zu einer Rotationsachse der Zahnwelle (1) erstrecken;
- Rollieren auf mindestens einem Teilabschnitt des mindestens einen verzahnten Abschnitts (1a) quer zur Achsrichtung der Zahnwelle zur Herstellung mindestens eines Montageabschnitts (1b), wobei ein Flankenwinkel (a_{b}) der Verzahnungen (2b) in dem Montageabschnitt (1b) größer ist als der Flankenwinkel (aₐ) in dem verzahnten Abschnitt (1a) ausgestaltet wird.

6. Verfahren nach Anspruch 5,
**dadurch gekennzeichnet, dass**
durch das Rollieren eine Zahndicke (d_{b}) der Verzahnungen (2b) in dem mindestens einen Montageabschnitt (1b) vergrößert wird.

7. Verfahren nach Anspruch 5 oder 6,
**dadurch gekennzeichnet, dass**
durch das Rollieren ein Fußkreisdurchmesser (f_{b}) der Verzahnungen (2b) in dem mindestens einen Montageabschnitt (1b) vergrößert wird.

8. Verfahren nach einem der Ansprüche 5 bis 7,
**dadurch gekennzeichnet, dass**
durch das Rollieren ein Kopfkreisdurchmesser (k_{b}) der Verzahnungen (2b) in dem mindestens einen Montageabschnitt (1b) vergrößert wird.

9. Verfahren nach einem der Ansprüche 5 bis 8,
**dadurch gekennzeichnet, dass**
durch das Rollieren ein Materialfluss von Verzahnungen (2b) zwischen die Zahnflanken der Verzahnung (2b) in dem mindestens einen Montageabschnitt (1b) bewirkt wird.

10. Verwendung einer Zahnwelle nach den Ansprüchen 1 bis 4 in der Herstellung einer Funktionswelle, die Herstellung umfassend die folgenden Schritte:
- Bereitstellen einer Zahnwelle (1) nach einem der Ansprüche 1 bis 4;
- Aufschieben mindestens eines Funktionselements (3), insbesondere einer Nocke oder eines Sensorrings, mit einer Bohrung (3a), die komplementär zu den Verzahnungen des verzahnten Abschnitts (1a) der Zahnwelle (1) verzahnt ist, auf mindestens einen verzahnten Abschnitt (1a) der Zahnwelle (1);
- Aufpressen des mindestens einen Funktionselements (3) auf den mindestens einen Montageabschnitt (1b).

## Claims

1. A toothed shaft (1) having a toothed portion (1a), in which tooth arrangements (2a) are formed on the cover of the toothed shaft (1) and extend parallel with a rotation axis of the toothed shaft (1),
an assembly portion (1b) having tooth arrangements (2b) adjoins the toothed portion (1a), wherein the number and the radial position of the tooth arrangements (2b) in the assembly portion (1b) correspond to the number and the radial position of the tooth arrangements (2a) in the toothed portion (1a), and wherein at least one tooth thickness (d_{b}) of the tooth arrangements (2b) is greater in the assembly portion (2a) than a tooth thickness (dₐ) in the toothed portion (1a), or at least one root circle diameter (f_{b}) of the tooth arrangements (2b) in the assembly portion (1b) is greater than the root circle diameter (fₐ) in the toothed portion (1a), or at least one tip circle diameter (k_{b}) of the tooth arrangements (2b) in the assembly portion (1b) is greater than the tip circle diameter (kₐ) in the toothed portion (1a), **characterized in that** a flank angle (a_{b}) of the tooth arrangements (2b) is greater in the assembly portion (1b) than the flank angle (aₐ) in the toothed portion (1a).

2. The toothed shaft (1) as claimed in claim 1,
**characterized in that**
a functional element (3) having a hole (3a) which is toothed in a manner complementing the tooth arrangements of the toothed portion (1a) of the toothed shaft (1) is pressed on the assembly portion (1b) of the toothed shaft (1).

3. The toothed shaft (1) as claimed in claim 2,
**characterized in that**
the functional element (3) is formed by a cam or a sensor ring.

4. The toothed shaft (1) as claimed in one of the preceding claims,
**characterized in that**
the toothed shaft has a plurality of toothed portions (1a) with adjoining assembly portions (1b) for fixing a plurality of functional elements (3).

5. A method for producing a toothed shaft (1) as claimed in one of the preceding claims, comprising the following steps:
- providing a toothed shaft (1) having at least one toothed portion (1a), in which there are formed on the cover of the toothed shaft (1) tooth arrangements (2a) which extend parallel with a rotation axis of the toothed shaft (1);
- rolling on at least one part-portion of the at least one toothed portion (1a) transversely to the axial direction of the toothed shaft in order to produce at least one assembly portion (1b), whereas a flank angle (a_{b}) of the tooth arrangements (2b) is made greater in the assembly portion (1b) than the flank angle (aₐ) in the toothed portion (1a).

6. The method as claimed in claim 5,
**characterized in that**
a tooth thickness (d_{b}) of the tooth arrangements (2b) in the at least one assembly portion (1b) is increased by the rolling.

7. The method as claimed in claim 5 or 6,
**characterized in that**
a root circle diameter (f_{b}) of the tooth arrangements (2b) in the at least one assembly portion (1b) is increased by the rolling.

8. The method as claimed in one of claims 5 to 7,
**characterized in that**
a tip circle diameter (k_{b}) of the tooth arrangements (2b) in the at least one assembly portion (1b) is increased by the rolling.

9. The method as claimed in one of claims 5 to 8,
**characterized in that**
a material flow from tooth arrangements (2b) between the tooth flanks of the tooth arrangement (2b) in the at least one assembly portion (1b) is brought about by the rolling.

10. Use of a toothed shaft according to claims 1 to 4 in the manufacture of a functional shaft, the manufacture comprising the following steps::
- providing a toothed shaft (1) as claimed in one of claims 1 to 5;
- pushing on at least one functional element (3), in particular a cam or a sensor ring, having a hole (3a) which is toothed in a manner complementing the tooth arrangements of the toothed portion (1a) of the toothed shaft (1), on at least one toothed portion (1a) of the toothed shaft (1);
- pressing the at least one functional element (3) on the at least one assembly portion (1b).

## Revendications

1. Arbre cannelé (1) pourvu d'une section cannelée (1a) dans laquelle sur l'enveloppe de l'arbre cannelé (1) sont réalisées des cannelures (2a) qui s'étendent en parallèle à un axe de rotation de l'arbre cannelé (1), et une section de montage (1b) à cannelures (2b) est adjacente à la section cannelée (1a), dans lequel le nombre et la position radiale des cannelures (2b) dans la section de montage (1b) correspondent au nombre et à la position radiale des cannelures (2a) dans la section cannelée (1a), et dans lequel au moins une épaisseur de dent (d_{b}) des cannelures (2b) dans la section de montage (2a) est supérieure à une épaisseur de dent (dₐ) dans la section cannelée (1a), ou au moins un diamètre de cercle de pied de cannelure (f_{b}) des cannelures (2b) dans la section de montage (1b) est supérieur au diamètre de cercle de pied de cannelure (fₐ) dans la section cannelée (1a), ou au moins un diamètre extérieur (k_{b}) des cannelures (2b) dans la section de montage (1b) est supérieur au diamètre extérieur (kₐ) dans la section cannelée (1a),
**caractérisé en ce qu'**un angle de flanc (α_{b}) des cannelures (2b) dans la section de montage (1b) est supérieur à l'angle de flanc (αₐ) dans la section cannelée (1a).

2. Arbre cannelé (1) selon la revendication 1, **caractérisé en ce qu'**un élément fonctionnel (3) muni d'un alésage (3a) qui est cannelé de manière complémentaire aux cannelures de la section cannelée (1a) de l'arbre cannelé (1) est emmanché par pression sur la section de montage (1b) de l'arbre cannelé (1).

3. Arbre cannelé (1) selon la revendication 2, **caractérisé en ce que** l'élément fonctionnel (3) est formé par une came ou une bague de détection.

4. Arbre cannelé (1) selon l'une quelconque des revendications précédentes, **caractérisé en ce que** l'arbre cannelé présente plusieurs sections cannelées (1a) avec des sections de montage (1b) adjacentes pour la fixation de plusieurs éléments fonctionnels (3).

5. Procédé de fabrication d'un arbre cannelé (1) selon l'une quelconque des revendications précédentes, comprenant les étapes suivantes consistant à :
- fournir un arbre cannelé (1) pourvu d'au moins une section cannelée (1a) dans laquelle sur l'enveloppe de l'arbre cannelé (1) sont réalisées des cannelures (2a) qui s'étendent en parallèle à un axe de rotation de l'arbre cannelé (1) ;
- effectuer un roulage sur au moins une section partielle de ladite au moins une section cannelée (1a) transversalement à la direction axiale de l'arbre cannelé pour fabriquer au moins une section de montage (1b), un angle de flanc (α_{b}) des cannelures (2b) dans la section de montage (1b) étant configuré pour être supérieur à l'angle de flanc (αₐ) dans la section cannelée (1a).

6. Procédé selon la revendication 5, **caractérisé en ce que** le roulage augmente une épaisseur de dent (d_{b}) des cannelures (2b) dans ladite au moins une section de montage (1b).

7. Procédé selon la revendication 5 ou 6, **caractérisé en ce que** le roulage augmente un diamètre de cercle de pied de cannelure (f_{b}) des cannelures (2b) dans ladite au moins une section de montage (1b).

8. Procédé selon l'une quelconque des revendications 5 à 7, **caractérisé en ce que** le roulage augmente un diamètre extérieur (k_{b}) des cannelures (2b) dans ladite au moins une section de montage (1b).

9. Procédé selon l'une quelconque des revendications 5 à 8, **caractérisé en ce que** le roulage provoque un flux de matière des cannelures (2b) entre les flancs de dent de la cannelure (2b) dans ladite au moins une section de montage (1b).

10. Utilisation d'un arbre cannelé selon l'une quelconque des revendications 1 à 4 pour la fabrication d'un arbre fonctionnel, la fabrication comprenant les étapes suivantes consistant à :
- fournir un arbre cannelé (1) selon l'une quelconque des revendications 1 à 4 ;
- emmancher au moins un élément fonctionnel (3), en particulier une came ou une bague de détection, pourvu d'un alésage (3a) qui est cannelé de manière complémentaire aux cannelures de la section cannelée (1a) de l'arbre cannelé (1), sur au moins une section cannelée (1a) de l'arbre cannelé (1) ;
- emmancher par pression ledit au moins un élément fonctionnel (3) sur ladite au moins une section de montage (1b).
